# EUROPEAN PATENT APPLICATION

(11) **EP 2 544 131 A1**
(43) Date of publication of application: **09.01.2013**
(21) Application number: 12165719.1
(22) Date of filing: 26.04.2012
(51) Int. Cl.: G06Q 10/00

(54) **Interactive electronic technical manual system and method**

(30) Priority: 06.07.2011 US 201113177384
(71) Applicant: Honeywell International Inc., Morristown, NJ 07962-2245 (US)
(72) Inventor: Boucher, Donald J., Morristown, NJ 07962-2245 (US); Schmarje, Nathan, Morristown, NJ 07962-2245 (US)
(74) Representative: Houghton, Mark Phillip

(57) **Abstract**

Methods and systems are provided for an interactive electronic technical manual system. A system includes a user interface for receiving input from a user and providing output to the user. A database stores instructions associated with tasks. The system also includes a diagnostic reasoner for receiving commands, controlling an external device in response to the commands to implement a test of the external device, and sensing signals associated with the test of the external device. The system further includes an interface module in communication with the user interface, the database, and the diagnostic reasoner. The interface module sends instructions associated with tasks to the user interface from the database, conveys commands from the user interface to the diagnostic reasoner, receives data associated with the signals sensed by the diagnostic reasoner, and analyzes the data associated with the signals.

## Description

This invention was made with Government support under W56HZV-05-C-0724. The Government has certain rights in this invention.

### TECHNICAL FIELD

The present invention generally relates to interactive electronic technical manual ("IETM") systems and methods, and more particularly relates to IETM systems and methods for adaptively performing maintenance tasks.

### BACKGROUND

IETM systems are well known in the art to provide instructions and guidance to persons performing maintenance tasks. These systems assist maintenance personnel in performing maintenance tasks by providing instructions in an electronic format. Also known in the art are condition based maintenance ("CBM") products, such as diagnostic reasoners. These products interface with external devices to automatically perform maintenance tasks.

Unfortunately, there is little development in synchronizing the benefits of the IETM systems and the CBM products. Accordingly, it is desirable to provide an IETM system and method which merges the functionality of IETM systems with CBM products to provide new and advantageous results. Desirable features and characteristics of the present invention will become apparent from the subsequent detailed description of the invention and the appended claims, taken in conjunction with the accompanying drawings and this background of the invention.

### BRIEF SUMMARY

An interactive electronic technical manual system is provided for assisting in the performance of maintenance tasks. The system includes a user interface for receiving input from a user and providing output to the user. A database stores instructions associated with tasks. The system also includes a diagnostic reasoner for receiving commands, controlling an external device in response to the commands to implement a test of the external device, and sensing signals associated with the test of the external device. The system further includes an interface module in communication with the user interface, the database, and the diagnostic reasoner. The interface module sends instructions associated with tasks to the user interface from the database, conveys commands from the user interface to the diagnostic reasoner, receives data associated with the signals sensed by the diagnostic reasoner, and analyzes the data associated with the signals.

A method is provided for performing maintenance tasks. The method includes the step of receiving a request to perform a first task at a user interface. The request to perform the first task is sent to an interface module. The method also includes downloading at least a first instruction and a second instruction of the first task from a database to the interface module. The first instruction of the first task is sent from the interface module to the user interface. The method further includes receiving at the interface module an input from the user interface associated with the first instruction of the first task. The method also includes selecting based on the input associated with the first instruction of the first task one of (a) proceeding with the first task by sending the second instruction of the first task to the user interface or (b) beginning a second task by downloading at least a first instruction of a second task from the database and sending the first instruction of the second task to the user interface.

### BRIEF DESCRIPTION OF THE DRAWINGS

The present invention will hereinafter be described in conjunction with the following drawing figures, wherein like numerals denote like elements, and

Figure 1 is a block diagram showing an embodiment of an interactive electronic technical manual ("IETM") system; and

Figure 2 is a flow chart showing a method for performing maintenance tasks.

### DETAILED DESCRIPTION

The following detailed description is merely exemplary in nature and is not intended to limit the invention or the application and uses of the invention. As used herein, the words "exemplary" or "illustrated" mean "serving as an example, instance, or illustration." Thus, any embodiment described herein as "exemplary" or "illustrated" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Referring to the Figures, an interactive electronic technical manual ("IETM") system **10** and methods are shown and described herein.

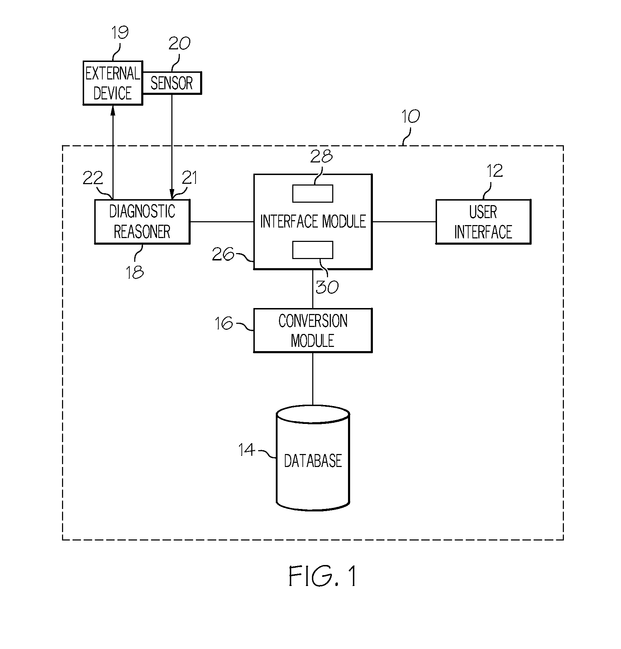

As shown in Figure 1, the system **10** of an illustrated embodiment includes a user interface **12** for receiving input from a user and providing output to the user. The user interface **12,** as described herein, refers to both the hardware and the software to interact with the user. The user interface includes at least one input device (not shown) for receiving information from the user and at least one output device (not shown) for conveying information to the user. The input device(s) may be implemented as a keyboard, a mouse, a touchscreen interface, a pushbutton, a microphone, or any other suitable device as realized by those skilled in the art. The output device(s) may be implemented as a display, a monitor, a speaker, a light, or any other suitable device as realized by those skilled in the art.

For example, in one embodiment, the user interface **12** may include a standard desktop or laptop computer (not shown) having a monitor for visual output, speakers for audio output, and a keyboard and mouse for receiving input. In another embodiment, the user interface **12** may include a tablet-style computer (not shown) with a display for visual output and a touchscreen interface for input. Of course, those skilled in the art will realize other suitable devices and programming that may be implemented as the user interface **12.**

The system **10** also includes a database **14** for storing data. The database **14** may be implemented with any suitable data storage device, including, but certainly not limited to, a hard disk drive, optical disks, or memory circuits. Of course, the database **14** may be implemented as a plurality of separate databases **14.** The database **14** or databases **14** may be located on a common storage device (not shown) or on separate storage devices.

The database **14** of the illustrated system **10** stores various instructions associated with maintenance tasks. The instructions may be stored in the database **14** in any number of formats. For example, the instructions may be in flat ASCII or Unicode text files, in portable document format ("PDF") files, in markup language files (e.g., HTML, XML, SVG), or Microsoft Word format files. Of course, other formats may be utilized to store the instructions in the database **14** as readily appreciated by those skilled in the art.

The system **10** of the illustrated embodiment includes a conversion module **16** in communication with the database **14.** The conversion module **16** converts the files containing the instructions into files having a standardized format. For example, if the instructions associated with one maintenance task are stored in a PDF file and the instructions associated with another maintenance task are stored in a Microsoft Word file, then the conversion module **16** converts each of these files into the same, standardized format. However, the system **10** may be implemented without the conversion module **16,** e.g., in a situation where all of the instructions are already in a standardized format.

The system **10** also includes a diagnostic reasoner **18.** The diagnostic reasoner **18** may be referred to as a diagnostic reasoner, a prognostic reasoner, or a condition based maintenance ("CBM") product by those skilled in the art. One example of a diagnostic reasoner **18** is the Platform Soldier Mission Readiness System ("PS-MRS") developed by Honeywell International Inc. of Phoenix, Arizona. The diagnostic reasoner **18,** as described herein, refers to both the hardware and the software necessary for implementation, as is appreciated by those skilled in the art. Specifically, the diagnostic reasoner **18** of the illustrated embodiment includes one or more software programs operating on a microprocessor (not shown) capable of storing and executing the software program(s).

The diagnostic reasoner **18** interacts with an external device **19** to perform a test or tests on the external device **19.** Specifically, the diagnostic reasoner **18** receives a command or commands, controls the external device **19** in response to the command(s), and senses signals from at least one sensor **20** associated with the external device **19.**

For example, the external device **19** may be a two-way radio (not separately numbered). The diagnostic reasoner **18** may test the transmission and reception capabilities of the radio at a plurality of frequencies. As such, the diagnostic reasoner **18** includes at least one sensor input **21** for interfacing with the at least one sensor **20** and at least one control output **22** for interfacing with the external device **19** to control the external device **19.** That is, the diagnostic reasoner **18** may control the external device **19** with the at least one control output **22** and receive input via the at least one sensor input **21.**

As alluded to above, the at least one sensor **20** is electrically connected to the at least one sensor input **21** of the diagnostic reasoner **18** to provide sensor readings, i.e., sensor data, to the diagnostic reasoner **18.** More specifically, the sensor **20** or sensors **20** of the illustrated embodiment senses conditions associated with the external device **19.** Using the example of the two-way radio above, the sensor **20** may be a wireless signal detector to determine if radio frequency (RF) signals are being generated by the two-way radio. Of course, those skilled in art realize numerous other examples of the sensor **20** depending on the external device **19** and the particular condition to be tested.

The diagnostic reasoner **18** may also be utilized to trigger a built-in test of the external device **19.** The term "built-in test" is often alternately referred to as a "built-in self test" or "on-board diagnostics" by those skilled in the art. For example, the external device **19** may an instrument panel (not shown) for a vehicle. The instrument panel may include a plurality of gauges controlled by a controller. The controller of the instrument panel may cycle the gauges through a plurality of positions and ensure that the gauges show the proper positioning. The controller may then report back to the diagnostic reasoner **18** as to the result of the built-in test.

The system **10** further includes an interface module **26.** The interface module **26** is implemented with a software program executable on a microprocessor (not shown). The interface module **26** is in communication with the user interface **12,** the database **14** (e.g., via the conversion module **16),** and the diagnostic reasoner **18.** The interface module **26** receives instructions associated with tasks from the database **14** and sends those instructions to the user interface **12,** conveys commands from the user interface **14** to the diagnostic reasoner **18,** receives data associated with the signals sensed by the diagnostic reasoner **18,** and analyzes the data associated with the signals. Furthermore, the interface module **26** performs other functions and operations as described herein.

Said plainly, the interface module **26** controls all communications between the user interface **12,** the database **14,** and the diagnostic reasoner **18.** In the illustrated embodiment, the interface module **26** is in communication with the conversion module **16,** which is in communication with the database **14.** The user interface **12** of the system **10** does not communicate directly with the database **14** or the diagnostic reasoner **18.** Likewise, the diagnostic reasoner **18** of the system **10** does not communicate directly with the user interface **12** or the database **14.** Instead, all commands, requests, and data transmission are handled by the interface module **26** and its associated software. As such, the diagnostic reasoner **18** is not "concerned" with the specific input entered by the user at the user interface **12.** That is, the diagnostic reasoner **18** need not process the data going to and from the user interface **12.** Instead, the diagnostic reasoner **18** receives all of its commands from the interface module **26** which filters unnecessary and extraneous data and commands from the user interface **12.**

The interface module **26** of the illustrated embodiment includes an input command parser **28** and a database content parser **30.** The parsers **28, 30** are each implemented as a unit of software that is part of the interface module **26.** The input command parser **28** receives all of the input commands received by the interface module **26.** After the input commands are received, the input command parser **28** determines whether those commands are associated with the diagnostic reasoner **18** or the user interface **12.** That is, the input command parser **28** parses all incoming commands. The database content parser **30** parses the data from the database **14.** That is, the database content parser **30** separates instructions that must be viewed by the user on the user interface **12** from instructions that may be implemented as commands deliverable to the diagnostic reasoner **18.** The database content parser **30** may also format the instructions downloaded from the database into a predetermined format.

Once the input commands and the data is parsed by the parsers **28, 30,** the input command parser **28** then processes content, i.e., data, from the database **14** based on the commands. If the content processed is a command for the diagnostic reasoner **18,** then that command is sent to the diagnostic reasoner **18.** Conversely, if that content is not a command for the diagnostic reasoner **18,** i.e., the content is an instruction for the user, then that content is sent to user interface **14** to be presented to the user.

As previously stated, the interface module **26** accepts various requests from the user interface **12.** Specifically, the interface module **26** of the illustrated embodiment may receive commands from the user interface **12** for (a) a request for a table of contents of maintenance tasks stored in the database **14,** (b) a request for the formatted contents of a maintenance task or tasks stored in the database **14,** (c) a request to view a next page of contents of a particular maintenance task or tasks, (d) a command for the diagnostic reasoner **18,** e.g., a built-in test request, and (e) an internal command for the interface module **26.**

The interface module **26** also sends and receives various data and commands from the diagnostic reasoner **18.** A command being sent to the diagnostic reasoner **18** is typically a formatted command for the diagnostic reasoner **18** to perform a specific action. Data sent from the diagnostic reasoner **18** to the interface module **26** may include, but is not limited to, (a) a response to a command, (b) an indication of whether or not a maintenance action is being performed, (c) the results of a maintenance action, and (d) an indication of the specific maintenance tasks that may be performed to resolve a problem.

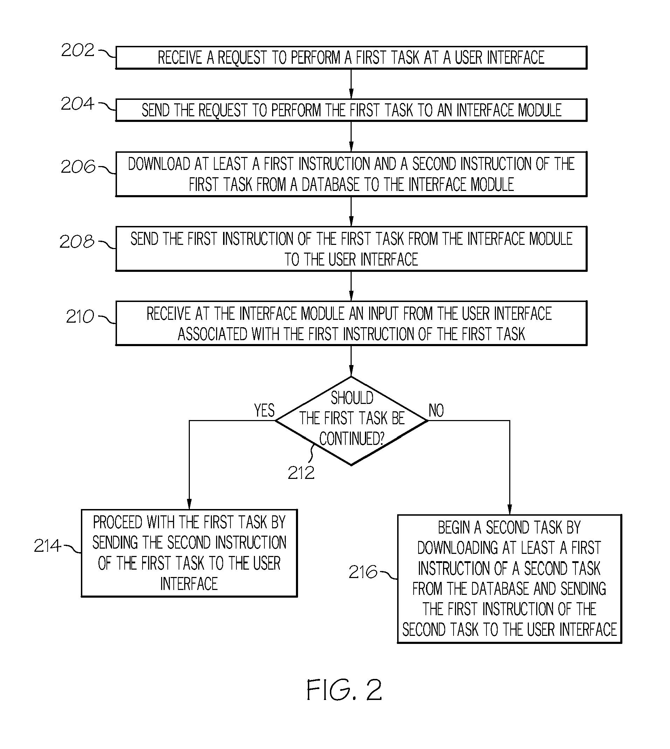

The interface module **26** of the illustrated embodiment is programmed to perform methods of performing maintenance tasks, as alluded to above. Referring now to Figure 2, the method begins in block **202** by receiving a request to perform a first task at the user interface **12.** That is, the user inputs that they are ready to perform the first task utilizing the user interface **12.**

The method continues in block **204** by the user interface **12** sending the request to perform the first task to the interface module **26.** Simply put, a command is sent from the user interface **12** to the interface module **26** requesting that the first task is performed. In response to this request, the instructions of the first task are downloaded from the database **14** to the interface module **26,** as shown in block **206.** These instructions include at least a first instruction and a second instruction. These instructions may be parsed by the database content parser **30** as described above.

In block **208,** the interface module **26** then sends the first instruction of the first task to the user interface **12.** An input associated with the first instruction of the first task is then received at the user interface **12** in block **210.** For example, the instruction may state "remove and inspect spark plug" for an engine. The display of the user interface **12** may show a plurality of spark plug conditions such as "normal", "worn", "carbon deposits", or "oil deposits". The user then removes the spark plug and inspects it. The user is then able to input the condition of the spark plug into the user interface **12.**

The input received from the user at the user interface **12** is then sent to the interface module **26.** In one embodiment, the interface module **26** then selects the appropriate manner in which to proceed based on the input from the user. When a determination is made to continue the first task, in block **212,** the interface module **26** will proceed with the first task by sending the second instruction of the first task to the user interface **12** in block **214.** When a determination is made not to continue the first task, the interface module **26** will begin a second task by acquiring one or more instructions of the second from the database **14** and sending a first instruction of the second task to the user interface **12** in block **216.** That is, the interface module **26** may temporarily or permanently abandon the first task and start a second task.

For example, in the case of the spark plugs described above, if the spark plug condition is "normal", the interface module **26** may simply continue with the second instruction of the first task, e.g., reinstalling the spark plug. However, if the spark plug condition is "oil deposits", it may be a sign of an oil leak in the engine. As such, the first task may be abandoned and a second task, e.g., to inspect for oil leaks within the engine, is initiated.

In another embodiment, the interface module **26** may select the appropriate manner to proceed based on data and/or results provided by the diagnostic reasoner **18.** In this embodiment, a command is conveyed from the user interface **12** to a diagnostic reasoner **18** via the interface module **26** in response to the input associated with the first instruction of the first task being received. For example, the first instruction of the first task may require that the external device **19** perform a built-in test and provide the user the ability to start the built-in test. Once selected by the user, a command is sent from the user interface **12** to the interface module **26,** which in turn sends a command to the diagnostic reasoner **18.** In response to the command being received at the diagnostic reasoner **18,** the diagnostic reasoner **18** then controls the external device **19** in accordance with the command.

Next, signals associated with the testing of the external device **19** are received by the diagnostic reasoner **18.** These signals may be provided by the at least one sensor **20** associated with the external device **19** or by the external device **19** itself, in the case of a built-in test. Data associated with these signals is sent from the diagnostic reasoner **18** to the interface module **26.** The interface module **26** then analyzes the data to determine the next course of action. As such, the interface module **26** then selects either to proceed with the first task or to begin the second task based on the data associated with the signals from the diagnostic reasoner **18.**

When the interface module **26** selects to begin the second task, it may abandon the first task or put the first task on hold. If put on hold, the method may return to the first task after completion of the second task. Also, in a fashion similar to the interruption of the first task in favor of the second task as described above, the second task may also be interrupted in favor of a third task.

The methods provided by the interface module **26** of the illustrated embodiment include managing content that includes logic element conditionals, lists, and loops. For example, if the external device **19** is a circuit breaker (not shown) to be tested, and there are a plurality of circuit breakers that need to be tested, the interface module **26** may prompt the user, via the user interface **12** to test each circuit breaker individually and input the results of the test for each individual circuit breaker. However, depending on the circuit breaker under test, the results of the test, and its defined interconnections, only a subset of additional circuit breakers may require the test.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of performing maintenance tasks, said method comprising the steps of:
receiving a request to perform a first task at a user interface;
sending the request to perform the first task to an interface module;
downloading at least a first instruction and a second instruction of the first task from a database to the interface module;
sending the first instruction of the first task from the interface module to the user interface;
receiving at the interface module an input from the user interface associated with the first instruction of the first task; and
selecting based on the input associated with the first instruction of the first task sent one of (a) proceeding with the first task by sending the second instruction of the first task to the user interface or (b) beginning a second task by downloading at least a first instruction of a second task from the database and sending the first instruction of the second task to the user interface.

2. A method as set forth in claim 1 further comprising the step of returning to the first task after completion of the second task.

3. A method as set forth in claim 1 further comprising the step of conveying a command from the user interface to a diagnostic reasoner via the interface module in response to the input associated with the first instruction of the first task.

4. A method as set forth in claim 3 further comprising the step of controlling an external device in accordance with the command.

5. A method as set forth in claim 4 further comprising the step of sensing signals at the diagnostic reasoner associated with a test performed in accordance with the command.

6. A method as set forth in claim 5 wherein the signals are provided by one or both of the external device and at least one sensor associated with the external device.

7. A method as set forth in claim 5 further comprising the steps of:
sending data associated with the signals from the diagnostic reasoner to the interface module; and
analyzing the data associated with the signals from the diagnostic reasoner at the interface module.

8. A method as set forth in claim 7 wherein said step of selecting is further defined as selecting one of (a) proceeding with the first task by sending the second instruction of the first task to the user interface or (b) beginning the second task by acquiring the first instruction of the second task from the database and sending the first instruction of the second task to the user interface based on the data associated with the signals from the diagnostic reasoned

9. A method as set forth in claim 1 further comprising the step of formatting the instructions downloaded from the database into a predetermined format with a content parser.

10. An interactive electronic technical manual system for assisting in the performance of maintenance tasks, said system comprising:
a user interface for receiving input from a user and providing output to the user;
a database storing instructions associated with tasks;
a diagnostic reasoner for receiving commands, controlling an external device in response to the commands to implement a test of the external device, and sensing signals associated with the test of the external device; and
an interface module in communication with said user interface, said database, and said diagnostic reasoner for sending instructions associated with tasks to said user interface from said database, conveying the commands from said user interface to said diagnostic reasoner, receiving data associated with the signals sensed by said diagnostic reasoner, and analyzing the data associated with the signals.
